Europäisches Patentamt

European Patent Office

Office européen des brevets

(19)

(11) Veröffentlichungsnummer: **0 244 755 B1**

# EUROPÄISCHE PATENTSCHRIFT

(12)

(45) Veröffentlichungstag der Patentschrift:
06.02.91 Patentblatt 91/06

(51) Int. Cl.⁵: **B60R 13/08**, G10K 11/16,
E04B 1/82

(21) Anmeldenummer: **87106237.8**

(22) Anmeldetag: **29.04.87**

(54) Bauelement mit akustischen Eigenschaften.

(30) Priorität: 06.05.86 DE 3615360

(43) Veröffentlichungstag der Anmeldung:
11.11.87 Patentblatt 87/46

(45) Bekanntmachung des Hinweises auf die
Patenterteilung:
06.02.91 Patentblatt 91/06

(84) Benannte Vertragsstaaten:
DE ES FR GB IT SE

(56) Entgegenhaltungen:
DE-A- 2 758 041
DE-A- 2 921 050
DE-A- 3 030 238
DE-A- 3 233 654

(73) Patentinhaber: Stankiewicz GmbH
D-3101 Adelheidsdorf (DE)

(72) Erfinder: Hoffmann, Manfred, Dipl.-Ing.
Dorfstrasse 30
D-3101 Nienhof (DE)
Erfinder: Seemann, Norbert
Burwinkel 10 A
D-3101 Nienhagen (DE)

(74) Vertreter: Melzer, Wolfgang, Dipl.-Ing. et al
Patentanwälte Mitscherlich, Gunschmann,
Körber, Schmidt-Evers, Melzer
Steinsdorfstrasse 10
D-8000 München 26 (DE)

EP 0 244 755 B1

**Beschreibung**

Die Erfindung betrifft ein Bauelement mit akustischen Eigenschaften gemäß dem Oberbegriff des Anspruchs 1.

Ein Bauelement dieser Art ist aus der DE-OS 32 33 654 bekannt.

Im Zuge verschärfter Umweltschutz-Bedingungen sollen auch Verkehrsgeräusche weitgehend minimiert werden, insbesondere soll die von Kraftfahrzeugen ausgehende Schallemission durch Maßnahmen im Bereich der Hauptgeräuschquelle, nämlich dem Motor, reduziert werden. Hierzu sind in letzter Zeit unterschiedliche Lösungsvorschläge angeboten worden.

Die erwünschte Außengeräuschminderung bei Motorräumen von Kraftfahrzeugen wird insbesondere mit Hilfe von unteren Motorabschottungen vorgenommen, die die sonst freie Schallaustrittsfläche unterhalb des Motors durch ein akustisch wirksames Element abschließen. Durch eine solche Maßnahme wird zwar generell der Außengeräuschpegel abgesenkt, jedoch besteht für den Anwender die Gefahr, daß durch nicht optimierte und auch nicht optimierbare Gestaltung einer solchen unteren Motorabschottung der Innengeräuschpegel in der Fahrgastkabine ansteigt. Dieser negative Effekt kann nach allgemeinem Stand der Technik dadurch verhindert werden, daß neben den frei zugänglichen Wandungen des Motorraums auch die untere Motorabschottung mit einem luftschallabsorbierenden Material oder System versehen wird, mit dessen Hilfe die bei sonst glatten Begrenzungsflächen entstehenden Schallreflexionen vermieden werden, sowie der Schallpegel insgesamt abgesenkt wird.

Bisher sind Ausführungsformen solcher akustisch wirksamer Motorabschottungen bekannt geworden, die im Regelfall mechanisch hoch widerstandsfähige Trägerschalen verwenden, die relativ teuere Kunststoffe und kostspielige Herstellverfahren bedingen. Solche Schalen werden vorzugsweise mit Luftschallabsorbern auf Schaumstoffbasis ausgerüstet, z.B. in Form direkt aufgebrachter verpreßter oberflächenkaschierter Schäume oder mit verpreßten und verformten Schaumfolien, die auf Abstand vor die Trägerschale gesetzt werden. Für das Abstimmen von Absorbern auf Schaumstoffbasis oder auf der Basis faseriger Materialien stehen dem Durchschnittsfachmann aus der Literatur bekannte Möglichkeiten zur Verfügung. Die beeinflußbaren Parameter sind jedem einschlägigen Lehrbuch entnehmbar.

Der eingangs genannte Stand der Technik (vgl. DE-OS 32 33 654) gibt schallabsorbierende Bauelemente mit ebenen Begrenzungsflächen und einem innenliegenden Wabengerüst an, die im wesentlichen aus streng geometrisch verformten Folien bestehen, wobei die Begrenzungsflächen dieser Folien zu verlustbehafteten Schwingungen anregbar sind. Diese verlustbehafteten Schwingungen, die zur Luftschallabsorption genutzt werden, sind Biegeschwingungen der sogenannten Platten oder Begrenzungsflächen, wie dies auch in der DE-PS 27 58 041 (Sp. 3, Z. 33-45) erläutert ist.

Der Grundgedanke, daß die Schallabsorption durch Platteneigenschwingungen der Flächen der durch Folien erzeugten streng geometrischen Kammern erreicht wird, und zwar hauptsächlich deren Bodenflächen, ist ausführlich erläutert (DE-OS 32 33 654, S. 4, Z. 11-17). Die Frequenzbandbreite solcher Absorber ist jedoch, sofern nicht Zusatzmaßnahmen getroffen werden, offensichtlich sehr eng begrenzt. Wie ein solcher Absorber auf gegebene Spektren z.B. von Fahrzeugen, die im allgemeinen eine breitwandige Behandlung verlangen, abgestimmt werden soll, ist ebenfalls angegeben (a.a.O., S. 7, Z. 34/35, S. 8, Z. 1-6). Die Kammern sollen durch vorzugsweise kreuzförmig angeordnete Versickungen oder Vertiefungen in mehrere Teilkammern unterteilt werden, die dann insgesamt zu einer Verbreiterung des Absorptionsbandes führen, ohne daß die Absolutwerte abgesenkt werden.

Bauelemente der vorstehend erläuterten Art sind mit verschiedenen Nachteilen behaftet. Z.B. ist bereits die übliche Verwendung teurer hochfester Kunststoffe in Verbindung mit ebenso kostspieligen Herstellverfahren, verursacht z.B. durch das Einbringen von Glasfasern in die Materialien, offensichtlich nachteilig. Dieser Nachteil ist bei Massenprodukten besonders gravierend. Für Absorber auf Schaumstoffbasis gilt es zu berücksichtigen, daß sich bei Verletzung der Oberfläche der darunter liegende Schaum unter Einwirkung von Feuchtigkeit wie z.B. Wasser, aber auch Benzin und Öl, schnell mit diesen flüssigen Medien vollsaugt. Dadurch wird die Absorptionswirkung spürbar stark abgesenkt, wobei außerdem durch das Vollsaugen mit entzündlichen Stoffen eine erhebliche Gefahrenquelle entsteht, die vermieden werden muß. Die beschriebenen ebenen Bauelemente sind zwar akustisch wirksam und auf vorgegebene Frequenzbänder abstimmbar, jedoch verhindert die vom Fahrzeughersteller verbindlich vorgeschriebene äußere Geometrie der Karosserie den Einsatz solcher ebener Elemente als vollfunktionsfähiges Fahrzeugteil mit einer geforderten akustischen Wirksamkeit. Die Anwendung der erläuterten Wabenstrukturen setzt ebene Elemente mit streng geometrischen Rastern voraus. Zusätzlich besteht die Bedingung, daß die Begrenzungsflächen der durch die Wabenstruktur erzeugten Kammern schwingfähig, also zu Biegeschwingungen anregbar, bleiben müssen. Es wird zwar in der DE-OS 30 30 238 (S. 8, letzter Absatz) darauf hingewiesen, daß eine abschließende Grundplatte als sehr steife, starre Platte ausgeführt sein kann, was am Beispiel ebener Auflageflächen durch Stützmauern entsprechend vorbereiteten Wänden von Tunnelbauten usw. erläutert wird. Jedoch müssen auch in diesem Fall mindestens einige Flächen der Kammer zu Platteneigenschwingungen anregbar sein.

Es ist daher Aufgabe der vorliegenden Erfindung, ein Bauelement mit akustischen Eigenschaften anzugeben, das eine wählbare Form besitzen kann, dessen Absorptionsverhalten trotzdem auf vorgegebene Frequenzbänder abstimmbar ist und dessen Absolutwerte der Luftschallabsorption nach Möglichkeit auf weit höhere Werte gebracht werden können als bisher.

Außerdem sollen für eine so gestaltete untere Motorabschottung neben der erforderlichen Luftschallabsorption auch beachtliche luftschalldämmende Wirkung vorliegen sowie die mechanischen Anforderungen nach hoher Steifigkeit erfüllt sein.

Die Aufgabe wird erfindungsgemäß durch die kennzeichnenden Merkmale des Anspruchs 1 gelöst.

Die Erfindung wird durch die Merkmale der Unteransprüche weitergebildet.

Es können also Wabenstrukturen nahezu beliebiger Geometrie, auch innerhalb eines Bauelementes, verwendet werden, wodurch eine außerordentlich günstige Ausführungsform unter Beachtung der im jeweiligen Anwendungsfall vorgegebenen geometrischen Verhältnisse, etwa der Fahrzeuggeometrie, gefunden werden kann. Durch die Wabenstruktur wird in Verbindung mit mit der Schale festverbundenen Stegen hohe Steifigkeit erzeugt, was die Verwendung teurer selbsttragender mechanisch hochwiderstandsfähiger Kunststoffe als nach außen, z. B. zur Straße, zeigender Abdeckung überflüssig macht. Ferner ermöglicht dies das spannungsfreie Aufbringen unversteifter Foliensysteme als Abdeckung, die bei Verwendung des Bauelementes als Motorabschottung dem Motor zugewandt ist.

Das vorgeschlagene, vorteilhaft dreidimensional verformte Bauelement mit akustischen Eigenschaften räumt also das Vorurteil aus, daß bei solchen Konstruktionen nur durch Ausnutzung der Platteneigenschwingungen absorbiert werden kann. Die Geometrie der Stege der Wabenstruktur ist frei wählbar, was dem Konstrukteur solcher Bauelemente erhebliche Freiheiten läßt. Durch die Wabenstruktur mit allseits geschlossenen Kammern kann der Absorber niemals vollständig durch Feuchtigkeit unbrauchbar werden, im ungünstigsten Fall werden höchstens einige Kammern beschädigt.

Zur Schallquelle wie einem Motor können als (obere) Abdeckungen Foliensysteme hinweisen, die Lufteinschlüsse aufweisen und die außerordentlich geringe Eigensteifigkeit besitzen. Die Lufteinschlüsse besitzen gedrungene, d.h Linsenform, so daß offenbar nur eine einzige Eigenfrequenz auftritt (vgl. DE-OS 29 21 050, S. 10, Abs. 2). Diese liegt dann in einem für den zu schützenden Gegenstand wie dem Fahrzeug nicht interessierenden hohen Frequenzbereich. Die gesamte auftreffende Luftschallenergie wird also zur Anregung von reinen Hubschwingungen der verschiedenen unregelmäßig geformten Waben bzw. Wabenkammern genutzt. Wirksam wird damit lediglich der Wellenwiderstand in Luft, so daß die Anpassung zwischen dem auftreffenden Luftschall und der in den Wabenkammern eingeschlossenen Luft ideal ist. Dies führt, wie bereits Versuche gezeigt haben, zu sehr hohen Absolutwerten der Luftschallabsorption, die sich gegenüber dem bekannten Stand der Technik deutlich abgrenzen. Durch die konstruktiv besonders vorteilhaften unterschiedlich großen Wabenkammern, durch die Lufteinschlüsse in den Foliensystemen sowie durch die Ausnutzung verschiedener Reibungseffekte wird außerdem eine sehr günstige Breitbandigkeit hinsichtlich der Luftschallabsorption erreicht.

Da Platteneigenschwingungen zur Herbeiführung der Luftschallabsorption im Bauelement gemäß der Erfindung nicht benötigt werden, können für die Schale und die Stege Materialien, insbesondere Kunststoffe, mit hoher innerer Dämpfung verwendet werden. Hierdurch gelingt es trotz der erwünschten hohen Biegesteifigkeit des gesamten Bauelementes, Körperschalldämpfung zu implementieren, durch die verhindert wird, daß das als insbesondere Motorabschottung verwendbare Bauelement bei Körperschallerregung Sekundär-Luftschall abstrahlen kann.

Durch das Bauelement gemäß der Erfindung wird im Vergleich zu herkömmlichen Systemen ein erheblicher Fortschritt erzielt. Die zusätzlichen positiven Eigenschaften erhöhter Luftschalldämmung und verminderter Sekundär-Luftschallabstrahlung addieren sich zu einer optimalen Gesamtwirkung.

Die Erfindung wird anhand des in der Zeichnung dargestellten Ausführungsbeispiels näher erläutert. Es zeigen :

Fig. 1 im Schnitt ein erfindungsgemäß ausgebildetes Bauelement,

Fig. 2 perspektivisch und schematisch ein Bauelement gemäß der Erfindung, bei dem ein Teil des Foliensystems hochgeklappt ist,

Fig. 3 den Luftschallabsorptionsgrad eines erfindungsgemäß ausgebildeten Bauelements über der Frequenz, gemessen nach DIN 52 212 im Hallraum.

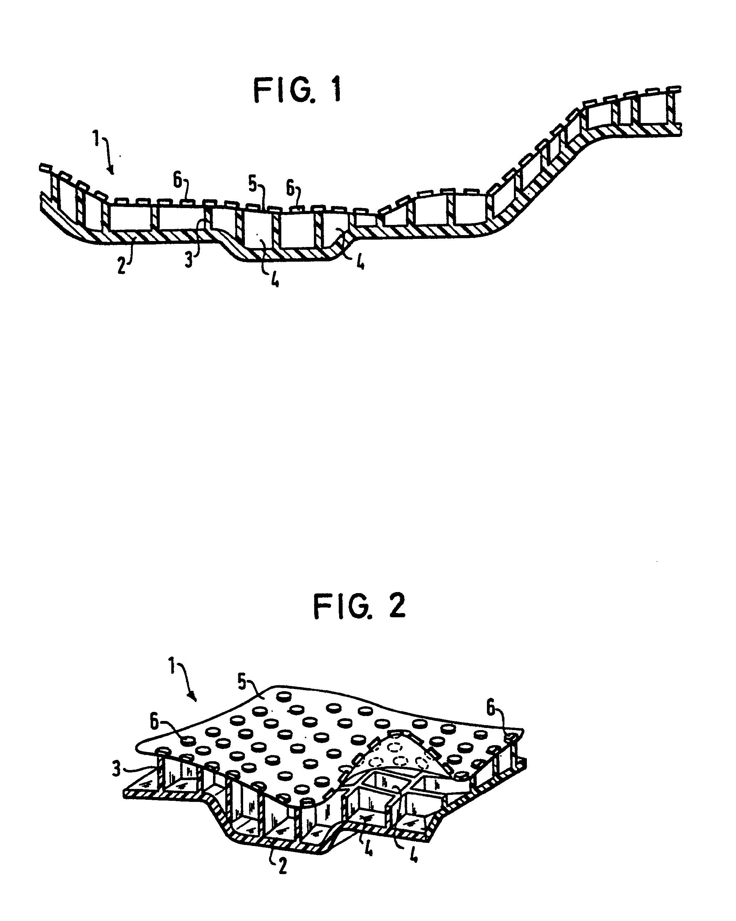

Fig. 1 zeigt im Schnitt ein Bauelement 1 bestehend aus einer verformten Schale 2, auf die Stege 3 aufgesetzt sind, die in der Schnittebene im wesentlichen parallel zueinander ausgerichtet sind. Zwischen den Stegen 3 sind Kammern oder Waben 4 ausgebildet, die in Aufsicht unterschiedliche geometrische Form besitzen können, beispielsweise 3, 4, 6- usw. eckig. Die Stege 3 besitzen unterschiedliche Höhe. An den der Schale 2 abgewandten Enden der Stege 3 ist ein Foliensystem 5 aufgebracht, das schematisch dargestellte Lufteinschlüsse 6 besitzt. Der Verlauf des Foliensystems 5 kann sich, wie dargestellt, deutlich von dem Verlauf der Schale 2 unterscheiden.

In der Praxis richten sich der Verlauf der Schale 2 und der Verlauf des Foliensystems 5 nach den jeweils vorgegebenen konstruktiven Bedingungen. Bei einer Anwendung des Bauelements 1 als Motorabschottung für den Motorraum eines Kraftfahrzeugs ist die Außenseite der Schale 2 der Straße und die Innenseite des Foliensystems 5 dem Motor zugewandt. Dadurch sind die konstruktiven Bedingungen vorgegeben, gemäß denen die Schale 2 bzw. das Foliensystem 5 dreidimensional verformt sind. Dies ist perspektivisch gesehen in Figur 2 angedeutet. Dort ist insbesondere auch dargestellt, daß die Waben 4 unterschiedliche Abmessungen aufweisen können. Als in der Praxis zweckmäßig hat sich herausgestellt, daß die Stege 3 eine minimale Höhe von 5 mm besitzen, damit eine zugeordnete Wabe 4 akustisch wirksam sein kann. Desgleichen ist zweckmäßig, wenn das die Waben 4 abschließende Foliensystem 5 eine Flächenmasse zwischen 80 und 150 gm$^{-2}$ besitzt.

Zweckmäßig bestehen die Schale 2 u. die Stege 3 aus einem geeigneten Material hoher innerer Dämpfung, insbesondere einem Kunststoff. Zur vereinfachten Herstellung ist es zweckmäßig, wenn Stege 3 und Schale 2 einstückig miteinander verbunden sind. Dann können diese vorteilhaft mittels eines Spritzgieß- oder eines RIM-Verfahrens hergestellt werden.

Das Foliensystem 5 ist im wesentlichen schematisch dargestellt. Die Lufteinschlüsse 6 können wie angedeutet derart vorgesehen sein, daß die die Lufteinschlüsse 6 umgebenden Teile des Foliensystems 5 derart ausgebildet sind, daß von dem übrigen Bauelement 1 noppenartige Vorsprünge gebildet sind, in deren Inneren sich die Lufteinschlüsse 6 befinden. Solche Vorsprünge können gleichmäßig und auch ungleichmäßig über die Gesamtfläche des Foliensystems 5 verteilt sein. Sie können über den ganzen Verlauf des Foliensystems 5 gleichartig sein, sie können auch unterschiedlich sein. Bei gleichartiger Ausbildung und gleichförmiger Verteilung über die Fläche des Foliensystems kann vorteilhaft von der Bahn eines Massenprodukts abgetrennt werden.

Bei geeigneter Bemessung der geringen Eigen-Biegesteifigkeit der Schale 2 und der Stege 3 sowie der Abmessungen der Kammern 4 und der Stege 3 wird insgesamt ein Bauelement 1 erzielt, das für sich gesehen bereits selbsttragend ist und darüber hinaus die erwünschte akustische Wirkung besitzt.

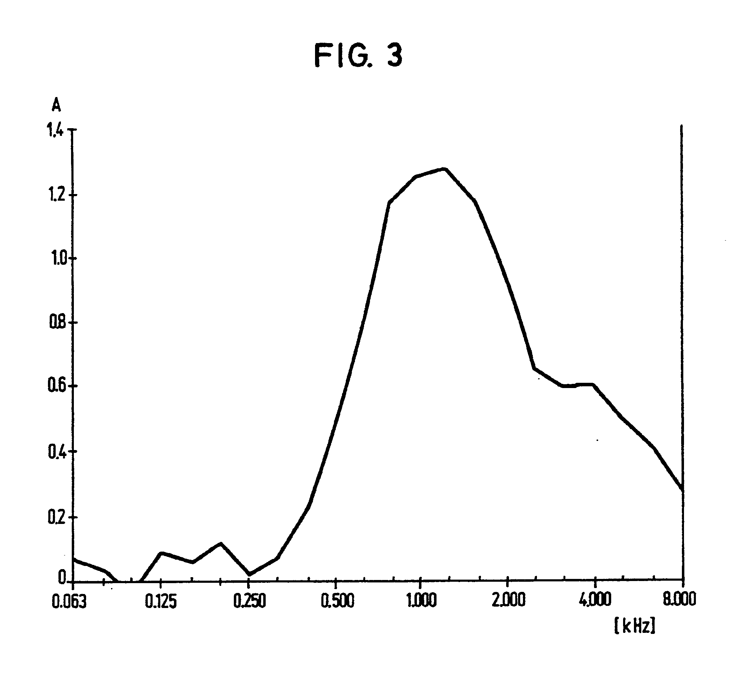

Fig. 3 zeigt den nach DIN 52 212 in einem Hallraum ermittelten Luftschallabsorptionsgrad A eines nach der Erfindung ausgebildeten Bauelements 1 über der Frequenz. Es zeigt sich, daß im entscheidenden, insbesondere zur Abschottung von Motorräumen von Kraftfahrzeugen wesentlichen Frequenzbereich eine sehr hohe Absorption erzielt ist.

**Ansprüche**

1. Baulement mit akustischen Eigenschaften, bestehend aus
   – einer Schale (2) mit geringer Eigen-Biegesteifigkeit,
   – mit der Schale (2) fest verbundenen rasterartig angeordneten Waben (4) bildenden Stegen (3) und
   – einem die Waben (4) nach außen abschließenden Foliensystem (5) geringer Biegesteifigkeit, dadurch **gekennzeichnet**, daß das Foliensystem (5) in sich linsenförmige Luftkammern (6) aufweist und daß zur Luftschallabsorption, unter Ausnutzung der Reibungsdämpfung und lediglich Berücksichtigung des Wellenwiderstandes der Luft, zum Erreichen akustisch angepaßter durch die Waben (4) definierter Luftkammern die Abmessungen der die einzelnen Waben (4) bildenden Stege (3) über die Erstreckung der Schale (2) sowie über den Verlauf der Schale (2) selbst so gewählt sind, daß die einzelnen Waben (4) örtlich unterschiedlich verteilt angeordnet und selbst unterschiedlich bemessen sind.

2. Bauelement nach Anspruch 1, dadurch **gekennzeichnet**, daß die Schale (2) dreidimensional verformt ist.

3. Bauelement nach Anspruch 1 oder 2, dadurch **gekennzeichnet**, daß das Bauelement (1) insgesamt dreidimensional verformt ist.

4. Bauelement nach einem der Ansprüche 1 bis 3, dadurch **gekennzeichnet**, daß das Bauelement (1) durch geeignete Wahl der Form und der Abmessungen der Waben (4) in Verbindung mit der Schale (2) insgesamt hohe Biegesteifigkeit besitzt.

5. Bauelement nach einem der Ansprüche 1 bis 4, dadurch **gekennzeichnet**, daß die Stege (3) aus einem Material, insbesondere einem Kunststoff, mit hoher innerer Dämpfung bestehen.

6. Bauelement nach einem der Ansprüche 1 bis 5, dadurch **gekennzeichnet**, daß die Schale aus einem Material, insbesondere einem Kunststoff, mit hoher innerer Dämpfung besteht.

7. Bauelement nach einem der Ansprüche 1 bis 6, dadurch **gekennzeichnet**, daß die Höhe der Stege (3) mindestens 5 mm beträgt.

8. Bauelement nach einem der Ansprüche 1 bis 7, dadurch **gekennzeichnet**, daß das abschließende Foliensystem (5) eine Flächenmasse zwischen 80 und 150 gm$^{-2}$ besitzt.

9. Bauelement nach einem der Ansprüche 1 bis 8, dadurch **gekennzeichnet**, daß die Schale (2) und die Stege (3) einstückig im Spritzgieß- oder RIM-Verfahren hergestellt sind.

10. Verwendung des Bauelements (1) nach einem der Ansprüche 1 bis 9 als untere Motorabschottung für Kraftfahrzeuge unter Beibehaltung der vom Fahrzeughersteller vorgegebenen Kontur.

11. Verwendung des Bauelements (1) mit akustischen Eigenschaften nach einem der Ansprüche 1 bis 10 als selbsttragendes Bauelement mit akustischer Wirkung in beliebigen Räumen, in denen Luftschallabsorption erforderlich ist.

## Claims

1. A constructional element having acoustic properties, consisting of
a shell (2) having a low intrinsic bending strength,
webs (3) fixed to the shell (2) in a grid arrangement, forming a honeycomb of cells (4), and
a foil system (5) having low bending strength closing off the honeycomb (4) on the outside, characterised in that the foil system (5) has lens-shaped air pockets (6) in it and in that for absorption of airborne sound by making use of the frictional damping, and taking into consideration only the wave-resistance (drag) of the air, acoustic matching of the air chambers defined by the honeycomb (4) is effected by selecting the dimensions of the webs (3) forming the individual cells of the honeycomb (4), both over the extent of the shell (2) and over the course of the shell (2) itself, so that in different places the individual cells (4) are differently arranged and themselves have different dimensions.

2. A constructional element according to claim 1, characterised in that the shell (2) is shaped in three dimensions.

3. A constructional element according to claim 1 or claim 2, characterised in that the whole constructional element (1) is shaped in three dimensions.

4. A constructional element according to any one of claims 1 to 3, characterised in that the form and dimensions of the cells (4) are so selected in relation to the shell (2) that the constructional element (1) as a whole has high bending strength.

5. A constructional element according to any one of claims 1 to 4, characterised in that the webs (3) consist of a material, in particular a plastic, having high internal damping capacity.

6. A constructional element according to any one of claims 1 to 5, characterised in that the shell consists of a material, in particular a plastic, having high internal damping capacity.

7. A constructional element according to any one of claims 1 to 6, characterised in that the height of the webs (3) is at least 5 mm.

8. A constructional element according to any one of claims 1 to 7, characterised in that the foil system (5) closinf off the cells has a mass per unit area between 80 and 150 gm$^{-2}$.

9. A constructional element according to any one of claims 1 to 8, characterised in that the shell (2) and the webs (3) are manufactured integrally by an injection moulding or RIM process.

10. The use of the constructional element (1) according to any one of claims 1 to 9 as the lower engine bulkhead for motor vehicles while maintaining the contours set by the motor vehicle manufacturer.

11. The use of the constructional element (1) with acoustic properties according to any one of claims 1 to 10 as a self-supporting acoustically effective constructional element in any space in which absorption of airborne sound is required.

## Revendications

1. Elément de construction ayant des propriétés acoustiques, comprenant :
– une coque (2) ayant une faible rigidité propre à la flexion,
– des entretoises (3) reliées de manière fixe à la coque (2), formant des cellules (4) en nid d'abeilles, et
– un système de feuilles (5) de faible rigidité à la flexion, obturant les cellules (4) en direction de l'extérieur **caractérisé** en ce que :
le système de feuilles (5) renferme des poches d'air (6) de forme lenticulaire, et
pour l'absorption du bruit transmis par l'air, en mettant à profit l'amortissement par frottement et en tenant compte uniquement de la résistance de l'air à la propagation des ondes, pour obtenir l'adaptation acoustique des chambres à air définies par les cellules (4), les dimensions des entretoises (3) formant les diverses cellules (4) sont choisies, sur l'étendue de la coque (2) ainsi que sur le tracé de la coque (2) elle-même de telle sorte que les diverses cellules (4) sont réparties localement de manière différente et qu'elles ont entre elles des dimensions différentes.

2. Elément de construction selon la revendication 1, caractérisé en ce que la coque (2) est déformée dans les trois dimensions.

3. Elément de construction selon la revendication 1 ou 2, caractérisé en ce que l'élément de construction (1) est, dans son ensemble, déformé dans les trois dimensions.

4. Elément de construction selon une des revendications 1 à 3, caractérisé en ce que l'élément de construction (1) possède, grâce à un choix approprié de la forme et des dimensions des cellules (4) en liaison avec la coque (2) une grande rigidité d'ensemble à la flexion.

5. Elément de construction selon une des revendications 1 à 4, caractérisé en ce que les entretoises (3) sont constituées d'un matériau, en particulier d'une matière plastique, ayant un fort amortissement interne.

6. Elément de construction selon une des revendications 1 à 5, caractérisé en ce que la coque (2) est constituée d'un matériau, en particulier d'une matière plastique, ayant un fort amortissement interne.

7. Elément de construction selon une des revendications 1 à 6, caractérisé en ce que la hauteur des entretoises (3) est d'au moins 5 mm.

8. Elément de construction selon une des revendications 1 à 7, caractérisé en ce que le système de feuilles (5) obturant a un grammage entre 80 et 150 gm$^{-2}$.

9. Elément de construction selon une des revendications 1 à 8, caractérisé en ce que la coque (2) et les entretoises (3) sont fabriquées d'une seule pièce, par moulage ou par un procédé "RIM".

10. Application de l'élément de construction (1) selon une des revendications 1 à 9 en tant que cloison sous le moteur d'un véhicule, en respectant le contour déterminé à l'avance par le constructeur du véhicule.

11. Application de l'élément de construction (1) ayant des propriétés acoustiques, selon une des revendications 1 à 10, en tant qu'élément de construction auto-porteur à effet acoustique, en tous espaces où l'absorption du bruit transmis par l'air est nécessaire.

# FIG. 1

# FIG. 2

## FIG. 3